# EUROPÄISCHE PATENTANMELDUNG

(11) **EP 3 206 290 A1**
(43) Veröffentlichungstag der Anmeldung: **16.08.2017**
(21) Anmeldenummer: 17401015.7
(22) Anmeldetag: 10.02.2017
(51) Int. Cl.: H02M 7/217, H05B 33/08, F21V 25/02, H02M 1/32

(54) **TRANSFORMATORLOSES NETZTEIL, INSBESONDERE FÜR LED-BELEUCHTUNGSSYSTEME**

(30) Priorität: 10.02.2016 DE 102016102348
(71) Anmelder: ecoTEC-Energy Vertriebs-GmbH, 84489 Burghausen (DE)
(72) Erfinder: HANDLBAUER, Gerhard, 83414 Fridolfing (DE)
(74) Vertreter: Heilein, Ernst - Peter

(57) **Zusammenfassung**

Es wird ein transformatorloses Netzteil, insbesondere Universalnetzteil, für die Versorgung einer LED-Beleuchtungseinrichtung (LAST) mit einer Versorgungsspannung bereitgestellt. Das Netzteil umfasst ein Mittel zum Gleichrichten (BR1) einer Netzspannung zum Bereitstellen einer gleichgerichteten Netzspannung, wobei das Netzteil ein Mittel zur Flankenabtastung (ICI1) der gleichgerichteten Netzspannung umfasst, welches ein Einstellmittel aufweist, um die gleichgerichtete Netzspannung zu einem vorherbestimmten einstellbaren Spannungswert abzutasten, wobei ein bevorzugtes Einstellmittel.
- einen Trimmer (T1) zum Einstellen einer benötigten Grundspannung in einem Bereich zwischen Null bis zur Amplitudenspitze der gleichgerichteten Netzspannung, und
- einen Potentiometer (P1) zum Feinjustieren des durch den Trimmer (T1) festgelegten Bereichs der benötigten Grundspannung
umfasst.

Durch die Flankenabtastung bzw. das Mittel zur Flankenabtastung (ICI1) kann die Ausgangsspannung des Netzteils auf einen beliebigen Wert eingestellt werden, bei gleichzeitiger Kosteneffizienz, da lediglich wenig elektronische Bauteile verwendet werden müssen. Durch die Flankenabtastung kann ferner eine leistungsarme Steuerung und/oder Regelung eines Verbrauchers, insbesondere eines LED-Leuchtmittels, gewährleistet werden. Folglich können Verlustleistungen möglichst gering gehalten werden.

## Beschreibung

Die Erfindung betrifft ein transformatorloses Netzteil, insbesondere Universalnetzteil, für die Versorgung einer LED-Beleuchtungseinrichtung mit einer Versorgungsspannung, umfassend ein Mittel zum Gleichrichten einer Netzspannung zum Bereitstellen einer gleichgerichteten Netzspannung.

Zur Versorgung von elektrischen Geräten, auch Verbraucher genannt, stehen in der Regel Anschlüsse an ein Stromnetz eines Energieversorgers, beispielsweise in Form von Steckdosen, zur Verfügung, an denen die zum Betrieb der Geräte erforderliche Energie mit einer vom Stromnetzbetreiber bestimmten Wechselspannung entnommen werden kann. Die Höhe und Frequenz dieser Wechselspannung sind weltweit nicht einheitlich. In den meisten Staaten stehen für den Verbraucher Wechselspannungen von etwa 115 bis 240 V mit Frequenzen von 50 bis 60Hz zur Verfügung. In Sonderversorgungsgebieten, wie beispielsweise Inselnetzen, kann jedoch statt einer Wechselspannung auch lediglich eine Gleichspannung zur Anwendung kommen.

Die über einen Stromnetz verfügbare Netzspannung kann bei vielen elektrischen Geräten nicht direkt zu deren Betrieb verwendet werden. Vielmehr muss die Netzspannung mittels eines Netzteiles (Transformator, kurz Trafo mit Elektronik, wie Gleichrichter, Elkos, Halbleiter, Widerstände und Sicherungen etc.) an die Erfordernisse des jeweiligen elektrischen Verbrauchers bzw. Geräts angepasst werden. Unter Netzteil kann ein eigenständiges Gerät oder eine Baugruppe bzw. Schaltung verstanden werden, welches die über ein Stromnetz beziehbare elektrische Energie in eine zum Betreiben eines elektrischen Verbrauchers geeignete Form umwandelt.

Ein Netzteil wandelt in der Regel, die an seinen Eingangsanschlüssen anliegende Wechsel- oder Gleichspannung, in eine davon abweichende Wechsel- oder Gleichspannung um, die von einem mit den Ausgangsanschlüssen des Netzteil verbundenen Verbraucher genutzt werden kann. Je nach Anwendungsfall kann eine eingangsseitige Wechselspannung in eine davon verschiedene ausgangsseitige Wechselspannung oder eine Gleichspannung umgewandelt werden, oder eine eingangsseitige Gleichspannung in eine ausgangsseitige Gleich- oder Wechselspannung. Eine ausgangsseitige Wechselspannung kann sich von einer eingangsseitigen Wechselspannung sowohl in der Höhe als auch in der Frequenz unterscheiden. Dazu muss auch die Leistung des Verbrauchers berücksichtigt werden.

Bei Verbraucher mit Halbleitern, wie LEDs, muss auch der Strom begrenzt werden. Bekannt sind Eisenkern- und Schaltnetzteile. Sowohl Eisenkerntrafos, die AC-Technik, als auch Schaltnetzteile sind kaum dimmbar (unter dimmen versteht man die Einstellmöglichkeit auf die gewünschte Leuchtstärke, bei Verringerung der Leistung), was aber bei vielen Anwendungen gefordert wird. Netzteile mit Eisenkern sind verhältnismäßig schwer und groß. Zur Verwendung mit üblichen elektrischen Verbrauchern, solche sind beispielsweise Glüh- oder Halogenlampen, Haushaltsgeräte, elektrische Maschinen und dergleichen, sind solche Eisenkern - Netzteile auf die jeweils verfügbare Netzfrequenz, d.h. auf 50 oder 60Hz ausgelegt. Bei diesen niedrigen Frequenzen sind die Hystereseverluste im Eisenkern und die zur passenden Spannungswandlung erforderlichen Induktivitäten und Kapazitäten sehr hoch. Das magnetische Wechselfeld übt eine Kraftwirkung auf die einzelnen Elemente des Eisenkerns aus, die sich bei vielen Eisenkerntrafos akustisch als Brummen bemerkbar machen. Zudem führen die magnetischen Streufelder des Eisenkerntrafos, sowie in den Leitungen, bei einigen elektrischen Geräten zu Störungen, die unter dem Begriff Netzbrummen bekannt sind. Außerdem sind Eisentransformatoren teuer. Für Gleichspannungen sind Eisenkerntransformatoren nicht geeignet. Es gibt viele Dimmer auf dem Markt, die für herkömmliche Lichtsysteme gut geeignet waren, dazu wurden hauptsächlich Phasenanschnittsteuerungen oder Phasenabschnittsteuerungen vorgesehen.

Eisenkerntransformatoren sind noch am besten mit Phasenabschnittsteuerung zu regeln, da hier ein sanfter Anlauf durch die verbliebene Anfangssinuswelle gegeben ist. Hier wird nur schlagartig abgeschaltet, was natürlich Störungen verursacht, die sich aber noch nicht so gravierend auswirken. Aus Kostengründen und der einfachen Technik wegen, findet man in den allermeisten Fällen aber eine Phasenanschnittsteuerung vor. Hier wird jedoch schlagartig mittels eines Triacs, die ohnehin schon sehr schnell und leistungsstark schalten, der Stromkreis extrem schnell in der Sinuswelle geschlossen. Dies führt zu heftigen Störungen aller nachfolgenden elektronischen Schaltungen. Brummen und Flackern bis hin zu längeren Ausfällen sind hier die Folge. Schaltnetzteile sind zwar kleiner, haben aber auch einen Trafo, meist aus Sintermaterial und eine umfangreiche Außenbeschaltung. Diese, elektronischen Netzteile eignen sich nicht für herkömmliche Dimmer. Die sind fast immer für große Spannungsbereiche gebaut, z.B. 110-240 V. Wird nun die Spannung an der Eingangsseite (Netzspannung) durch den Dimmer verringert, regelt die nachfolgende elektronische Schaltung die Spannung (110-240V) wieder hoch. Dimmbare Geräte arbeiten nicht zufriedenstellend, da es im Bereich der kleinsten Spannung zum Flackern kommt. Die angeschnittenen Phasen, welche durch die Dimmer bereitgestellt werden, können nicht sauber verarbeitet werden und bei den sich verringernden Impulsen, reist schließlich die Schwingung ab und es kommt zum Flackern. Die Impulse der Dimmer werden durch die nachfolgenden Netzteile auch noch stark verzerrt. Das sind Effekte die noch kein Hersteller richtig im Griff hat. Die meisten Hersteller verzichten daher ganz auf die Möglichkeit des Dimmens. Oder es wird mit anderen, aber aufwändigen Verfahren, wie 0-10V Steuerung oder digitalen Bussen gearbeitet. Dies erfordert aber eine Neuverkabelung und teure Zusatzgeräte.

Bei LEDs ist die Last derart gering, dass herkömmliche Schaltnetzteile oft erst gar nicht starten. Mit Lastsimulation oder zusätzlicher Last werden diese Netzteile oft weiterbetrieben, was natürlich zu unnötigen Verlusten führt. Alle Schaltnetzteile arbeiten mit hoher Frequenz und stören daher ganz erheblich den Funk. Die Bauweise ist auch aufwändig und immer noch zu groß. Dazu wird die Betriebsspannung meist verzögert geliefert (Softstart, je nach Bauart unterschiedlich). Außerdem kommt immer ein Transformator zum Einsatz, sowie Gleichrichter und auch Regelelemente wie ICs, Kondensatoren, Leistungstransistoren und Widerstände werden nötig, besonders wenn eine spannungs- oder stromstabile Schaltung gefordert ist. All diese Teile können ausfallen und sind obendrein auch noch teuer. Auch der Platzbedarf und das Gewicht sind Nachteile die gerade in der immer kleiner werdenden Mikroelektronik sehr störend sind. Oftmals ist das Netzteil schon größer als die gesamte Elektronik des Nutzgerätes.

Die AC-Technik ist ebenfalls transformatorlos und kommt mit sehr wenigen Bauteilen aus, welches diese Technik sehr zuverlässig und preiswert macht, ist aber als Reihenschaltung aufgebaut und die Spannung wird hier nicht reduziert oder wirkungsvoll geregelt. Lediglich die Last wird an die Spannung angepasst. Dimmen ist möglich, da die AC-Technik die Wechselspannung an den Verbraucher als reduzierte Gleichspannung weitergibt, aber der Regelbereich ist unzureichend. Schon bei geringer Spannungsreduzierung, wird der Strom stark vermindert, was eine erhebliche Lichtreduzierung zur Folge hat. Der Regelbereich wird also drastisch eingeschränkt. Die Regelung wird also sofort greifen, während der restliche Regelbereich wirkungslos verstreicht. Diese Schaltung wurde auch nicht als dimmbare Ausführung gestaltet.

Die DE 20 2005 006 053 U1 offenbart eine Energiesparlampe, in welcher Leuchtdioden auf einer Platine aus einem beliebigen Basismaterial angeordnet sind, welche von einem kapazitiven Netzteil, das einen zeitlich konstanten Gleichstrom liefert, oder einem getakteten Netzteil ohne Transformator oder einem getakteten Netzteil mit diskretem Schalttransistor oder einem Netzteil mit Speicherkondensator und Phasenanschnittsteuerung gespeist werden, welches über einen Anschluss, der in bestehende Fassungen für Glühlampen, Halogenlampen oder Leuchtstofflampen eingesetzt werden kann, mit dem Wechselspannungsnetz verbunden werden kann, wobei vor den LEDs eine Optik zur Lichtverteilung angeordnet ist.

Im Übrigen sei noch auf die US 2002/0158590 A1, die US 2015/036612 A1, die DE 20 2011 109 987 U1 sowie die GB 2489513 A hingewiesen.

Aufgabe der vorliegenden Erfindung ist es, ein Netzteil bereitzustellen, welches eine flexible, insbesondere einstellbare, Spannungsversorgung für Leuchtmittel bereitstellt.

Diese Aufgabe wird durch ein transformatorloses Netzteil, insbesondere Universalnetzteil gemäß Anspruch 1 gelöst.

Es wird ein transformatorloses Netzteil, insbesondere Universalnetzteil, für die Versorgung einer LED-Beleuchtungseinrichtung mit einer Versorgungsspannung bereitgestellt. Das Netzteil umfasst ein Mittel zum Gleichrichten einer Netzspannung zum Bereitstellen einer gleichgerichteten Netzspannung, wobei das Netzteil erfindungsgemäß ein Mittel zur Flankenabtastung der gleichgerichteten Netzspannung umfasst, welches ein Einstellmittel aufweist, um die gleichgerichtete Netzspannung zu einem vorherbestimmten einstellbaren Spannungswert abzutasten.

Durch die Flankenabtastung kann die Ausgangsspannung des Netzteils auf einen beliebigen Wert eingestellt werden, bei gleichzeitiger Kosteneffizienz, da lediglich wenig elektronische Bauteile verwendet werden müssen. Durch die Flankenabtastung kann ferner eine leistungsarme Steuerung und/oder Regelung eines Verbrauchers, insbesondere eines LED-Leuchtmittels, gewährleistet werden. Folglich können Verlustleistungen möglichst gering gehalten werden.

Die elektronischen Komponenten des erfindungsgemäßen Netzteils können beispielsweise mittels SMD-Technologie bereitgestellt werden, so dass das Netzteil mit sehr geringen Baugrößen implementierbar ist und folglich in ein Leuchtmittel oder anderen Verbrauchern, integrierbar und/oder einsetzbar ist. Das transformatorlose Universal-Netzteil gemäß der vorliegenden Erfindung kann direkt an der Wechselspannung eines üblichen Stromnetzes über geeignete Anschlüsse versorgt werden und besteht lediglich nur aus wenigen Teilen, bei sehr geringen Ausmaßen. Es ist ebenfalls denkbar, dass das Netzteil gemäß der vorliegenden Erfindung als Halbleiterschaltung realisierbar ist.

Die durch das transformatorlose Netzteil gemäß der vorliegenden Erfindung bereitgestellte Versorgungsspannung steht vorzugsweise sofort zur Verfügung, kann aber auch verzögert, beispielsweise als Softstart, eingeschaltet oder bereitgestellt werden.

Das Netzteil gemäß der vorliegenden Erfindung wird ohne galvanische Trennung betrieben und erzeugt somit keine elektromagnetischen Störfelder. Folglich können Funknetze oder desgleichen nicht gestört werden.

Das erfindungsgemäße Netzteil und speziell die integrierte Halbleiterschaltung gemäß einer Ausführungsform sind sehr platzsparend realisierbar und ferner auch kosteneffektiv, wobei hohe Ströme und Lasten betreibbar sind. Weiter kann ein geräuschloser Betrieb gewährleistet werden, da keine galvanische Komponenten oder desgleichen notwendig sind.

Mit dem erfindungsgemäßen Netzteil können stromstabile Versorgungsspannungen erzeugt und geregelt werden. Durch die erfindungsgemäße Technik kann eine stufenlose Regelung und/oder Steuerung der zur Verfügung stehenden Ausgangsspannung, und des Ausgangsstromes und daraus resultierende Leistung gewährleistet werden.

Das Universalnetzgerät bzw. Netzteil gemäß der Erfindung weist eine Flankenabtastung auf, wobei jeder augenblickliche Wert der Eingangsspannung abgetastet werden kann und folglich eine Einstellung der Ausgangsspannung ermöglicht werden kann.

Das Netzteil gemäß der vorliegenden Erfindung eignet sich schließlich auch zum Betrieb an Dreiphasen-Wechselstromnetze (auch Drehstrom), sowie hohe Leistungen.

Bevorzugte Ausgestaltungen, welche einzeln oder in Kombination miteinander einsetzbar sind, sind in den abhängigen Ansprüchen angegeben.

Gemäß einer Ausführungsform der vorliegenden Erfindung ist das Einstellmittel eingerichtet, um eine mit der gleichgerichteten Netzspannung synchronisierte Steuerspannung für einen Regelungstransistor bereitzustellen, der die Versorgungsspannung der LED-Beleuchtungseinrichtung regelt. Folglich kann eine leistungsarme Regelung und/oder Steuerung des Verbrauchers bereitgestellt werden, da die Steuerspannung des Transistors in einem niedrigen Voltbereich geschaltet werden kann. Demnach kann durch Voreinstellung der Steuerspannung über einen entsprechenden Verstärkungsfaktor die eigentliche lastseitige Verbraucherspannung stufenlos geregelt werden. Alternativ dazu kann erfindungsgemäß bevorzugt der Transistor auch lediglich als Schalter betrieben werden, d.h. es ist kein Verstärkungsfaktor vorgesehen: Vielmehr geht der erste Komparator beim Erreichen der Schaltschwelle schlagartig auf high und schaltet somit den folgenden Schalter Q1 von gesperrt auf voll leitend, womit sich am Ausgang die Spannung einstellt, die zu diesem Zeitpunkt gerade anliegt.

Ein bevorzugtes Einstellmittel kann einen Trimmer zum Einstellen einer benötigten Grundspannung in einem Bereich zwischen Null bis zur Amplitudenspitze der gleichgerichteten Netzspannung, und/oder einen Potentiometer zum Feinjustieren des durch den Trimmer festgelegten Bereichs der benötigten Grundspannung umfassen. Diese hat zum Vorteil, dass mit dem Trimmer sich nun die benötigte Grundspannung im Bereich zwischen Null bis zur Amplitudenspitze der gleichgerichteten Netzspannung einstellen lässt; und/oder dieser Bereich ferner durch das Potentiometer auf einen gewünschten Wert feinjustiert werden kann. Demnach können stromstabile Versorgungsspannungen erzeugt und geregelt werden. Durch die erfindungsgemäße Beschaltung kann eine stufenlose Regelung und/oder Steuerung der zur Verfügung stehenden Ausgangsspannung, und des Ausgangsstromes und daraus resultierende Leistung gewährleistet werden.

Als Trimmer werden im Rahmen der vorliegenden Erfindung Einstellkomponenten bzw. Einstellmittel bezeichnet, die nur selten bzw. beispielsweise bei der Erstinbetriebnahme des Universalnetzteils gemäß der Erfindung in ihren Einstellungen verändert werden. Diese Einstellung kann beispielsweise durch Spezialwerkzeug (Schraubenzieher oder dergleichen) vorgenommen werden. Demnach kann ein Benutzer die benötigte Grundspannung bzw. Betriebsspannung des Universalnetzteils einstellen.

Für die Feinjustierung bzw. Feineinstellung werden erfindungsgemäß Potentiometer eingesetzt, welche ein werkzeugloses Stellmittel bereitstellen, und folglich besonders benutzerfreundlich sind. Diese Potentiometer können z.B. Dimmeigenschaften des Netzteils bereitstellen.

Insbesondere das Zusammenspiel beider elektronischer Komponenten, d.h. Potentiometer und Trimmer, im Sinne der vorliegenden Erfindung, gewährleisten einerseits eine benutzerfreundliche Schnittstelle in der Bedienung des Netzteils, und weiter kann ein sicherer Betrieb gewährleistet werden, da Grundeinstellungen insbesondere mit Spezialwerkzeugen vorgenommen werden können.

Des Weiteren erfindungsgemäß bevorzugt wird die synchronisierte Steuerspannung mittels eines Komparators bereitgestellt. Dies ermöglicht eine flexible Einstellung der Steuerspannung mittels einer einfach zu generierenden Referenzspannung. Die Referenzspannung könnte schaltungsintern bereitgestellt werden, aber auch eine externe Bereitstellung mittels einer weiteren Spannungsquelle ist denkbar.

In einer Ausführungsform ist das Mittel zum Gleichrichten der Netzspannung bevorzugt ein Brückengleichrichter, insbesondere ein Dioden-Brückengleichrichter. Solche Schaltungen sind kosteneffizient und können beispielsweise diskret oder auch als Modul implementiert werden.

Das Netzteil kann ausgangsseitig zumindest einen Glättungskondensator zum Glätten der mittels des Regelungstransistors geregelten Versorgungsspannung aufweisen. Dadurch kann eine reine Gleichspannung bereitgestellt werden, welche zum Betrieb der Last benötigt wird.

In einer weiteren Ausgestaltung umfasst das Mittel zur Flankenabtastung weiter ein Strombegrenzungsmodul, welches eingerichtet ist, um eine geregelte Strombegrenzung bereitzustellen.

Bevorzugt ist der einstellbare Spannungswert an einem Komparatoreingang, insbesondere am nicht-invertierenden Eingang des Komparators, anlegbar. Demnach kann eine genaue Flankenabtastung des Eingangssignals bereitgestellt werden.

Gemäß einer weiteren Ausführungsform der vorliegenden Erfindung wird eine LED-Leuchtröhre mit einem Netzteil umfassend zwei Anschlusssockel zum Anschließen an der Netzspannung bereitgestellt.

Die LED-Leuchtröhre weist vorzugsweise eine Sicherheitseinrichtung auf, welche eingerichtet ist, um im Falle einer Falschmontage die Anschlusssockel elektrisch zu trennen.

Gemäß einer möglichen Ausführungsform umfasst die Sicherheitseinrichtung der LED-Leuchtröhre Relais, elektromagnetische und/oder nicht-elektromagnetische Schalter.

Erfindungsgemäß bevorzugt kann das Netzteil einen Längsstromregler als Strombegrenzung, ohne Bezugspotential, in dem die Strombegrenzungseinheit in Reihe zur Last liegt, aufweisen. Demnach ist keine Potentialtrennung vorgesehen. Über die Brückengleichrichter liegt die Spannung am Netzpotential, welches keiner galvanischen Trennung entspricht.

Zusammenfassend erlaubt das erfindungsgemäße Universalnetzgerät eine flexible Flankenabtastung der Versorgungsspannung, bei welcher praktisch jeder augenblickliche Wert abgetastet und folglich eine Einstellung der Ausgangsspannung ermöglicht werden kann.

Die Erfindung wird anhand von möglichen Ausführungsformen sowie anhand der Zeichnung näher erläutert.

Es zeigen schematisch:
- **Fig. 1**: ein Netzteil gemäß einer Ausführungsform der vorliegenden Erfindung; und
- **Fig. 2**: eine LED-Röhre mit einem Netzteil gemäß der vorliegenden Erfindung.

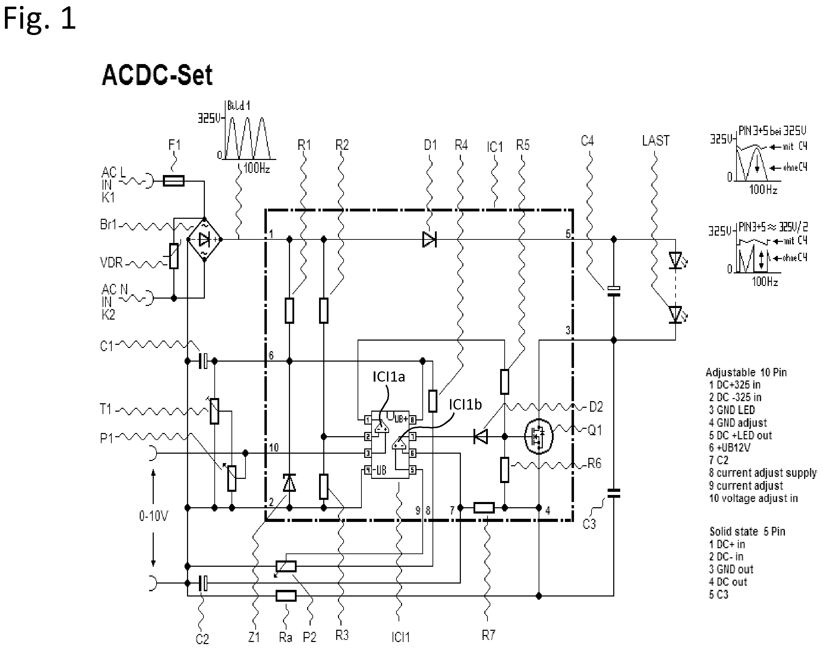

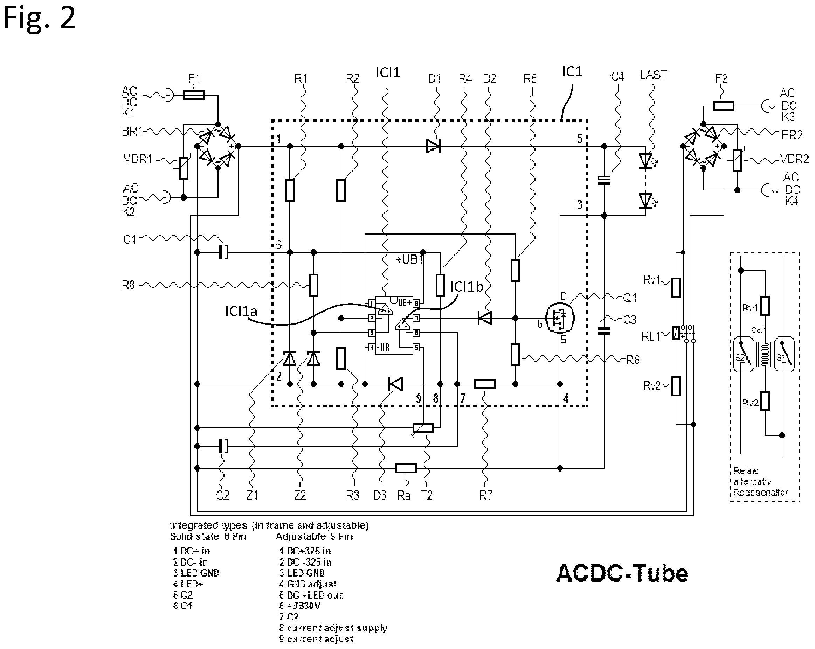

Im Folgenden wird der Betrieb eines Netzteils gemäß einer möglichen Ausführungsform der vorliegenden Erfindung mit Bezug auf **Fig. 1** und weiter die mögliche Verwendung des Netzteils zum Betreiben einer LED-Leuchtröhre mit Bezug auf Fig. **2** beschrieben.

Die Wechselspannung wird dem Netz entnommen und dem Gleichrichter Br1, der aus einzelnen Dioden, oder als Brückengleichrichter Br1 ausgebildet sein kann, über den Anschluss L und N, sowie F1, zugeführt. F1 ist eine Sicherung, die bei Kurzschluss den Stromkreis unterbricht. VDR ist ein spannungsabhängiger Widerstand (voltage depended resistor) der einen Kurzschluss verursacht, falls dessen Nennwert überschritten wird. Die Sicherung F1 wird dabei unterbrochen. Diese beiden Bauteile haben keine Wirkung auf die Funktion des Netzteils, sondern sind lediglich als Schutzelemente ausgebildet.

Am Gleichrichter Br1 liegt nun eine pulsierende Gleichspannung an, die sich als Folge von Parabeln abbildet, mit einer Frequenz von 100Hz bei beispielsweise 50Hz Eingangsfrequenz. Dies ergibt eine Zeitspanne von 10ms. D.h. die Spannung durchläuft in 5ms den Spannungswert 0 bis zur Amplitudenspitze. Bei 230V∼ (Wechselspannung) sind das 325V. Die Spannung fällt dann auch wieder von 325V gegen 0V. Schaltet man nun zum richtigen Zeitpunkt, z.B. nach 2,5ms ein, hat die Spannung erst 162,5V erreicht. Umgekehrt von 325V nach 0V wird zum gleichen Zeitpunkt eingeschaltet. Dann wurde ein Impuls von 2,5ms bei der steigenden und abfallenden Flanke erreicht. Das Bild "3 + 5 = etwa 325/2" (im rechten Abschnitt der **Fig. 1**) zeigt das Oszillogramm dieser Spannung, ohne Glättung (d.h. ohne C4) und mit Glättung (d.h. mit C4). Da gemäß dieser Ausführungsform mittels des MOS Feldeffekttransistors Q1 schnelle Schaltvorgänge erreicht werden können, kann eine geringe Verlustleistung und Wärmeentwicklung erreicht werden. Diese Impulse werden dann mittels C4 geglättet und es wird eine bereinigte Gleichspannung an einem Verbraucher LAST bereitgestellt. Mittels C3 werden ergänzend mögliche Schwingungsimpulse, die als Störungen auftreten, unterdrückt.

Gemäß einer Ausführungsform kann das Modul IC1 als integrierte Schaltung ausgebildet sein. Als zentrales Bauteil dieser Ausführungsform ist ein Mittel zur Flankenabtastung ICI1 vorgesehen, das im Wesentlichen als Operationsverstärker betrieben wird und im Wesentlichen als integrierte Schaltung ausgebildet ist. Der ICI1 umfasst erfindungsgemäß bevorzugt zwei Komparatoren ICI1a und ICI1b.

Der ICI1 ist vorzugsweise in einem Schaltkreis, auch Chip genannt integriert, kann aber auch diskret oder aufgeteilt verbaut sein. Dieser Chip ICI1 kann als MOSFET mit sehr geringer Leistungsaufnahme ausgeführt sein, wodurch R1 in sehr kleiner Leistung ausgebildet sein kann, über welchen die Betriebsspannung für ICI1 aus dem Br1 entnommen bzw. abgegriffen wird. Die Zenerdiode Z1 limitiert die Spannung auf 12V, die über C1 geglättet und dann über PIN 8 dem im Wesentlichen als Komparator betriebenen ICI1a zugeführt wird. R2 synchronisiert die Steuerung und löst zum richtigen Zeitpunkt gemäß der vorliegenden Erfindung die Schaltschwelle aus, welche über die Betriebsspannung und den Elementen T1 und P1 eingestellt wird, wobei T1 einen Trimmer und P1 ein Potentiometer bezeichnet. Der ICI1 arbeitet in dieser Ausführungsform als Komparator ICI1a (Vergleicher). Der Wert der gewünschten Spannung kann demnach festgelegt werden.

Mit dem Trimmer T1 lässt sich nun die benötigte Grundspannung im Bereich zwischen Null bis zur Amplitudenspitze der gleichgerichteten Netzspannung, also z.B. bei 230V- ca. 325 Gleichspannung, einstellen. Dieser Bereich kann zusätzlich durch das Potentiometer P1 feinjustiert werden, z.B. zum Dimmen innerhalb der benötigten Betriebsspannung.

Falls beispielsweise eine Betriebsspannung mit 40V an einem Verbraucher LAST benötigt wird, können diese 40V mit dem Trimmer T1 fest eingestellt werden. Mit Hilfe des Potentiometers P1 kann gemäß dieser Ausführungsform der vorliegenden Erfindung nun im Bereich von 0-40V geregelt werden.

Vorzugsweise kann dieser Ausgang aber auch mit einer Widerstandskombination (nicht gezeigt) fest eingestellt werden, wodurch noch weniger Bauteile benötigt werden. Diese Widerstandskombination kann auch in einem Chip IC1 integriert sein und dieser als "solid state"-Ausführung zur Verfügung stehen. Der Eingang 10 und Masse 2 des IC1 ist auch für analoge oder digitale Steuersignale vorgesehen. In diesem Fall, wird die Kombination T1 und P1 weggelassen und z.B. mit einem üblichen 0-10V oder digitalen oder analogen Steuergerät beschaltet. Mit der Widerstandskombination R2 und R3 wird die Eingangsspannung (Parabel) vorzugsweise ca. im Verhältnis 1 : 27 bei 325V und einer Betriebsspannung von 12V geteilt. Damit wird die Eingangs-Hyperbel der Betriebsspannung des Komparators ICI1a angepasst und steht als Referenz zur Verfügung. Diese wird auf den invertierenden Eingang des Komparators ICI1 a gelegt. Mit der Widerstandskombination wird die Parabelspannung an die Betriebsspannung des Mittels zur Flankenabtastung ICI1 angepasst und dient zur Synchronisation.

Beim Start der Parabel liegt somit der invertierende Eingang 2 am ICI1 a (Pin 2) auf low. Der nicht invertierende Eingang 3 am ICI1 a (Pin 3) liegt durch die Einstellung und der Kombination T1 und P1, oder 0-10V Eingang auf einen eingestellten + Pegel von 0 - ca. 10 V (d.h. high), also höher als Eingang 2 des ICI1a (Pin 2). Damit ist der Komparator ICI1a bzw. sein Ausgang (Pin 1) auf high. Der Ausgang des Komparators ICI1a, d.h. Pin 1 des ICI1, ist über den Begrenzungswiderstand R5 mit Transistor Q1 verbunden und schaltet diesen durch. Der Widerstand R6 dient als Stromflusswiderstand. Der ICI1 wird somit mit Strom versorgt. Dieser Zustand dauert aber nur solange, bis die Parabel den Wert erreicht, der an Pin 3 des ICI1 gemäß dieser Ausführungsform eingestellt ist. Wird dieser überschritten, wird der Ausgang 1 (d.h. Pin 1 des ICI1) des OPs ICI1a sofort auf low gesetzt und der Transistor Q1 (oder ein anderer geeigneter Schalter) sperrt. Der Strom bleibt solange abgeschaltet, bis die Parabel den Höchstwert überschritten hat und zur Schaltschwelle zurückgekehrt ist. Dann kann Q1 wieder durchschalten. Die Spannung kann erfindungsgemäß also in jedem Fall nur bis zur Schaltschwelle ansteigen und wird daher wirkungsvoll geregelt. Nun wird diese Spannung über C4 geglättet und steht als geregelte Gleichspannung zur Verfügung und kann am Pin 3 und Pin 5 des Chipmoduls IC1 über C4 abgenommen werden.

Die LED Beleuchtungstechnik gewinnt immer mehr an Bedeutung. Hierin und auch bei anderen Anwendungen ist eine Strombegrenzung notwendig. Halbleiter, sind Heißleiter. Da sich die Kristalle beim Betrieb erwärmen, verringert sich deren Widerstand, welches bei üblichen Verbrauchern umgekehrt ist, diese sind meist Kaltleiter. Das hat zur Folge, dass sich der Strom erhöht wenn die Temperatur im Kristall ansteigt. Die steigende Temperatur lässt aber den Strom weiter ansteigen, was sehr schnell zur Selbstzerstörung führt. Der Strom muss daher begrenzt werden. Die einfachste Möglichkeit ist, einen Widerstand in Reihe zu schalten. Der verbraucht aber die Energie und wandelt diese in Wärme um, welches für Verbraucher unvorteilhaft ist. Im Stand der Technik stehen Schaltungen aller Art zur Verfügung, die mit Transistoren oder integrierten Schaltungen (ICs) den Strom begrenzen.

In dieser Ausführungsform ist eine solche Strombegrenzungsschaltung zumindest teilweise in einem ICIlb bereits als Chip IC1 integriert, kann aber auch separat eingebaut werden oder in diskreter Ausführung eingesetzt sein.

Gemäß dieser Ausführungsform ist ein Strombegrenzungsmodul umfassend zumindest die Diode D2 und einen Komparator ICIlb vorgesehen, welches eingerichtet ist, um eine geregelte Strombegrenzung bereitzustellen. Dieses Modul kann auch als integrierte Schaltung ICI1 in einem Mikrochip IC1 ausgebildet sein.

Der gesamte Strom, den das Netzteil gemäß der vorliegenden Erfindung abgibt, fließt über den Arbeitswiderstand Ra und erzeugt dadurch eine Spannung, die proportional zur Stromstärke ist. Dadurch wird eine Regelspannung UR bereitgestellt, die der Belastung entspricht. Die Höhe dieser Regelspannung wird durch den Wert von Ra definiert.

Der ICIlb arbeitet in dieser Ausführungsform ebenfalls als Komparator. Hierin kann mittels eines Potentiometers P2 und/oder eines Trimmers T2, oder durch ein anderes Mittel, wie beispielsweise ein Festwiderstand, eine Referenzspannung eingestellt werden. Diese Referenzspannung wird nun dem Komparator ICIlb über dessen nicht invertierenden Eingang +, d.h. Pin 5 des ICI1 zugeführt und mit der am Widerstand R7 anliegenden Spannung verglichen.

Übersteigt nun die Regelspannung UR, den am nicht invertierenden Eingang eingestellten Wert, wird der Komparator ICIlb zurückgesetzt. Die Diode D2 koppelt die Regelung ab, und sorgt dafür, dass ICIlb nicht in die Steuerung eingreift, wenn der Sollwert im erlaubten Bereich liegt. Geht jedoch ICIlb (Ausgang Pin 7) auf low, d.h. der zulässige Stromverbrauch ist überschritten, wird D2 leitend und zieht die Regelspannung am Gate des Q1, oder eingesetzten Schalters, gegen GND, was wiederum die Regelspannung an R5 vermindert.

**Fig. 2** zeigt die Verwendung eines Netzteils gemäß **Fig. 1** bei einer LED-Leuchtröhre. Das Netzteil gemäß der vorliegenden Erfindung umfasst ein Hauptmodul IC1 welches als integrierte Schaltung oder diskret ausgebildet ist. Auch denkbar ist, dass IC1 beispielsweise, in Form von ICI1 teilintegriert ist. Der Betrieb des erfindungsgemäßen Universalnetzteils wurde mit Bezug auf **Fig. 1** detailliert beschrieben. In der Ausführungsform gemäß der **Fig. 2** ist lediglich eine weitere Zenerdiode Z2 in Reihe mit einem Widerstand R8 vorgesehen, die eine Strom- bzw. Spannungsbegrenzung an den nicht-invertierenden Eingang des Komparators ICI1 a bereitstellen.

Das erfindungsgemäße Mittel zur Flankenabtastung ICI1 wird jedoch wie in **Fig. 1** beschrieben, weiterhin betrieben.

Die Leuchtmittel der LED-Leuchtröhre, hier ebenfalls als LAST bezeichnet, werden mit Hilfe von zwei Anschlusssockeln K1, K2, K3, K4 zum Anschließen an der Netzspannung versorgt. Zur Bereitstellung einer geregelten Gleichspannung ist ein Netzteil vorgesehen, welches im Wesentlichen der Ausführungsform der **Fig. 1** entspricht.

Für einen sicheren Betrieb der erfindungsgemäßen LED-Leuchtröhre ist eine Sicherheitseinrichtung Rv1, Rv2, S1, S2, welche eingerichtet ist, um im Falle einer Falschmontage die Anschlusssockel elektrisch von der Netzspannung trennt.

Die Sicherheitseinrichtung Rv1, Rv2, S1, S2 kann Relais, elektromagnetische und oder nicht-elektromagnetische Schalter umfassen. Somit kann ein Benutzer stets vor Stromschlägen oder desgleichen geschützt werden. In **Fig. 2** wird eine mögliche alternative Ausführungsform der Sicherheitseinrichtung (rechter Figur-Rand: gestrichelte Einrahmung) für die LED-Leuchtröhre, umfassend Relais als Schaltmittel, gezeigt.

Die vorliegende Erfindung lässt sich wie folgt zusammenfassen: Es wird ein transformatorloses Netzteil, insbesondere Universalnetzteil, für die Versorgung einer LED-Beleuchtungseinrichtung LAST mit einer Versorgungsspannung bereitgestellt. Das Netzteil umfasst ein Mittel zum Gleichrichten BR1 einer Netzspannung zum Bereitstellen einer gleichgerichteten Netzspannung, wobei das Netzteil ein Mittel zur Flankenabtastung ICI1 der gleichgerichteten Netzspannung umfasst, welches ein Einstellmittel - vorzugsweise einen Trimmer T1 und/oder ein Potentiometer P1 umfassend - aufweist, um die gleichgerichtete Netzspannung zu einem vorherbestimmten einstellbaren Spannungswert abzutasten, wobei ein bevorzugtes Einstellmittel einen Trimmer T1 zum Einstellen einer benötigten Grundspannung in einem Bereich zwischen Null bis zur Amplitudenspitze der gleichgerichteten Netzspannung, und/oder einen Potentiometer P1 zum Feinjustieren des durch den Trimmer festgelegten Bereichs der benötigten Grundspannung umfasst.

Durch die Flankenabtastung bzw. das Mittel zur Flankenabtastung ICI1 kann die Ausgangsspannung des Netzteils auf einen beliebigen Wert eingestellt werden, bei gleichzeitiger Kosteneffizienz, da lediglich wenig elektronische Bauteile verwendet werden müssen. Durch die Flankenabtastung kann ferner eine leistungsarme Steuerung und/oder Regelung eines Verbrauchers, insbesondere eines LED-Leuchtmittels, gewährleistet werden. Folglich können Verlustleistungen möglichst gering gehalten werden.

## Patentansprüche

1. Transformatorloses Netzteil, insbesondere Universalnetzteil, für die Versorgung einer LED-Beleuchtungseinrichtung (LAST) mit einer Versorgungsspannung, umfassend:
- ein Mittel zum Gleichrichten (BR1) einer Netzspannung zum Bereitstellen einer gleichgerichteten Netzspannung,
**dadurch gekennzeichnet, dass**
- das Netzteil ein Mittel zur Flankenabtastung (ICI1) der gleichgerichteten Netzspannung umfasst, welches ein Einstellmittel aufweist, um die gleichgerichtete Netzspannung zu einem vorherbestimmten einstellbaren Spannungswert abzutasten.

2. Netzteil nach Anspruch 1, **dadurch gekennzeichnet, dass** das Einstellmittel eingerichtet ist, um eine mit der gleichgerichteten Netzspannung synchronisierten Steuerspannung für einen Regelungstransistor (Q1) bereitzustellen, der die Versorgungsspannung der LED-Beleuchtungseinrichtung (LAST) regelt.

3. Netzteil nach Anspruch 1 oder 2, **dadurch gekennzeichnet, dass** das Einstellmittel einen Trimmer (T1) zum Einstellen einer benötigten Grundspannung in einem Bereich zwischen Null bis zur Amplitudenspitze der gleichgerichteten Netzspannung umfasst.

4. Netzteil nach einem oder mehreren der Ansprüche 1 bis 3, **dadurch gekennzeichnet, dass** das Einstellmittel ein Potentiometer (P1) zum Feinjustieren des durch den Trimmer (T1) festgelegten Bereichs der benötigten Grundspannung umfasst.

5. Netzteil nach einem oder mehreren der vorhergehenden Ansprüche, insbesondere nach Anspruch 2, **dadurch gekennzeichnet, dass** die synchronisierte Steuerspannung mittels eines Komparators (ICI1a) bereitstellbar ist.

6. Netzteil nach einem oder mehreren der vorhergehenden Ansprüche, **dadurch gekennzeichnet, dass** das Mittel zum Gleichrichten (BR1) der Netzspannung ein Brückengleichrichter (BR1), insbesondere ein Dioden-Brückengleichrichter ist.

7. Netzteil nach einem oder mehreren der vorhergehenden Ansprüche, insbesondere nach Patentanspruch 5, **dadurch gekennzeichnet, dass** das Netzteil ausgangsseitig zumindest einen Glättungskondensator (C4) zum Glätten der mittels des Regelungstransistors (Q1) geregelten Versorgungsspannung aufweist.

8. Netzteil nach einem oder mehreren der vorhergehenden Ansprüche, **dadurch gekennzeichnet, dass** das Mittel zur Flankenabtastung (ICI1) weiter ein Strombegrenzungsmodul (D2, ICI1b) umfasst, welches eingerichtet ist, um eine geregelte Strombegrenzung bereitzustellen.

9. Netzteil nach einem oder mehreren der vorhergehenden Ansprüche, **dadurch gekennzeichnet, dass** der einstellbare Spannungswert an einem Komparatoreingang (ICI1b, 3), insbesondere am nicht-invertierenden Eingang des Komparators, anlegbar ist.

10. LED-Leuchtröhre mit einem Netzteil nach einem oder mehreren der vorhergehenden Ansprüche, umfassend zwei Anschlusssockel (K1, K2, K3, K4) zum Anschließen an der Netzspannung.

11. LED-Leuchtröhre nach Anspruch 10, **gekennzeichnet durch** eine Sicherheitseinrichtung (Rv1, Rv2, S1, S2), welche eingerichtet ist, um im Falle einer Falschmontage die Anschlusssockel (K1, K2, K3, K4) elektrisch von der Netzspannung trennt.

12. LED-Leuchtröhre nach Anspruch 11, **dadurch gekennzeichnet, dass** die Sicherheitseinrichtung (Rv1, Rv2, S1, S2) Relais, elektromagnetische und oder nicht-elektromagnetische Schalter aufweist.
